# EUROPEAN PATENT APPLICATION

(11) **EP 1 326 243 A1**
(43) Date of publication of application: **09.07.2003**
(21) Application number: 01963578.8
(22) Date of filing: 11.09.2001
(51) Int. Cl.: G11B 7/24

(54) **OPTICAL RECORDING MEDIUM**

(30) Priority: 12.09.2000 JP 2000276660; 12.09.2000 JP 2000276661
(71) Applicant: TDK Corporation, Chuo-ku, Tokyo 103-8272 (JP)
(72) Inventor: TSUKAMOTO, Syuji, TDK CORPORATION, Chuo-ku, Tokyo 103-8272 (JP)
(74) Representative: HOFFMANN - EITLE
(86) International application number: JP0107867
(87) International publication number: WO02023544

(57) **Abstract**

There is disclosed an optical recording medium having at least a recording layer provided on a light-transmissive substrate having grooves and lands with prepits, wherein said lands are generally rectangular or trapezoidal in cross section having a top surface and sidewalls, as well as a specified land height (h₁), and said prepits are formed in a land in the center area of the land in a width direction thereof, and spaced from the adjacent grooves by boundary walls of a specified height (h₂). The optical recording medium permits address information and disc rotation control information to be accessed accurately even if a track pitch is small, and which still can be manufactured efficiently, with the added capability of signal recording in high density and reproduction of high-quality signals.

## Description

### Technical Field

This invention relates to an optical recording medium having a recording layer provided on a substrate having grooves and lands with prepits. More specifically, the invention relates to an optical recording medium capable of reading address information accurately from prepits without affecting the recording/reproduction of information to/from the recording layer. The invention is applicable with particular advantage to recordable optical recording media, such as DVD-R and DVD-RW.

### Background Art

DVDs or digital versatile discs are optical recording media that permit digital recording and their common structure generally comprises a light-transmissive substrate overlaid with a recording layer, a reflective layer and a protective layer in that order.

In recordable optical recording media, such as DVD-R and DVD-RW, the substrate has a land-groove structure, with a guide groove, commonly referred to simply as a groove, being formed between adjacent two lands, for recording data signals using a laser beam. The shapes of lands and grooves are optimized considering the overall signal quality including various record/playback characteristics and servo signal characteristics. Grooves are formed with about 0.6 - 0.8 µm pitches, and are typically "wobbled" to follow wavy (or serpentine) paths with a specified cycle. By detecting the cycle, the disc can be rotated at an accurate linear velocity.

Lands have pits, more commonly called prepits, formed at given intervals, and the address information on the disc is recorded in these pits, thereby permitting the detection of orientations on the disc even if it is yet blank or unrecorded. Since the prepits are formed so as to keep a specified positional relationship with the wobbled grooves, data signals are recorded to and reproduced from a groove while detecting the signals from the prepits formed in either of the two lands adjacent to the groove, for instance, the outer land adjacent to the groove in a radius direction of the disc.

In order to ensure that address information from the prepit is accessed accurately or data signals are effectively recorded to and reproduced from adjacent grooves even if the track pitch is small, various R&D efforts have been made concerning the shape of prepits and the method of forming them. For example, JP-A-9-326138 and JP-A-2000-149330 disclose optical recording media having prepits formed cutting out one side of each land to reach either of adjacent grooves. JP-A-2000-11460 discloses an optical recording medium having prepits formed in each land at off-centered position thereof, for instance, at an inner position thereof in a radius direction of the disc.

However, those approaches above are unsatisfactory in that prepit signals cause undesirably great effects on groove signals, causing various problems such as the occurrence of unreadable errors during reproducing groove signals.

### Disclosure of Invention

An object, therefore, of the present invention is to provide an optical recording medium which permits address information and disc rotation control information to be accessed accurately even if the track pitch is small, and which still can be manufactured efficiently, with the added capability of signal recording in high density and reproduction of high-quality signals.

The invention attains this object by an optical recording medium having at least a recording layer provided on a light-transmissive substrate having grooves and lands with prepits, wherein said lands are generally rectangular or trapezoidal in cross section having a top surface and sidewalls, as well as a specified land height (h₁), and said prepits are formed in a land in the center area of the land in a width direction thereof, and spaced from the adjacent grooves by boundary walls of a specified height (h₂).

### Brief Description of Drawings

Fig. 1 shows schematically the essential part of a light-transmissive substrate to be used in an optical recording medium according to a first embodiment of the invention;
Fig. 2(a) shows schematically a cross section of the substrate having a land-groove structure in the optical recording medium according to the first embodiment of the invention; Figs. 2(b) and (c) show schematically cross sections of two substrates having a land-groove structure in optical recording media outside the scope of the invention; and
Fig. 3 shows schematically the essential part of a light-transmissive substrate to be used in an optical recording medium according to a second embodiment of the invention.

### Best Mode for Carrying Out the Invention

The optical recording medium of the invention is not limited in any particular way and may be of tape, card, disc or any other forms that are capable of optical recording. Most desirably, the invention is applied to DVD-R, DVD-RW and other recording discs capable of recording information at high density.

The optical recording medium of the invention uses a substrate having a land-groove structure and its specific configuration is determined as appropriate for the required performance of the medium. Therefore, the invention is applicable to any types of optical recording medium including a wobbled type and a non-wobbled type in which the grooves draw smooth curves in a circumferential direction.

The optical recording medium of the invention uses a light-transmissive substrate having grooves and lands of a specified height (h₁) with prepits, and is characterized in that said prepits are formed in the center area of the land in a width direction thereof, and are separated from the adjacent grooves by boundary walls of a specified height (h₂).

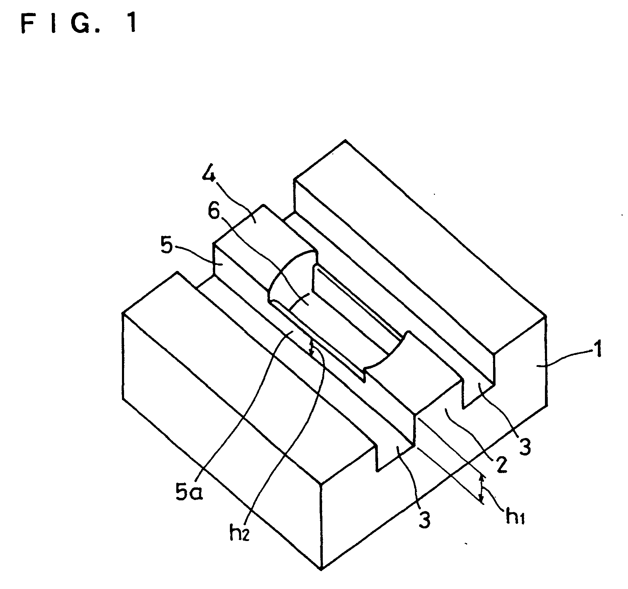

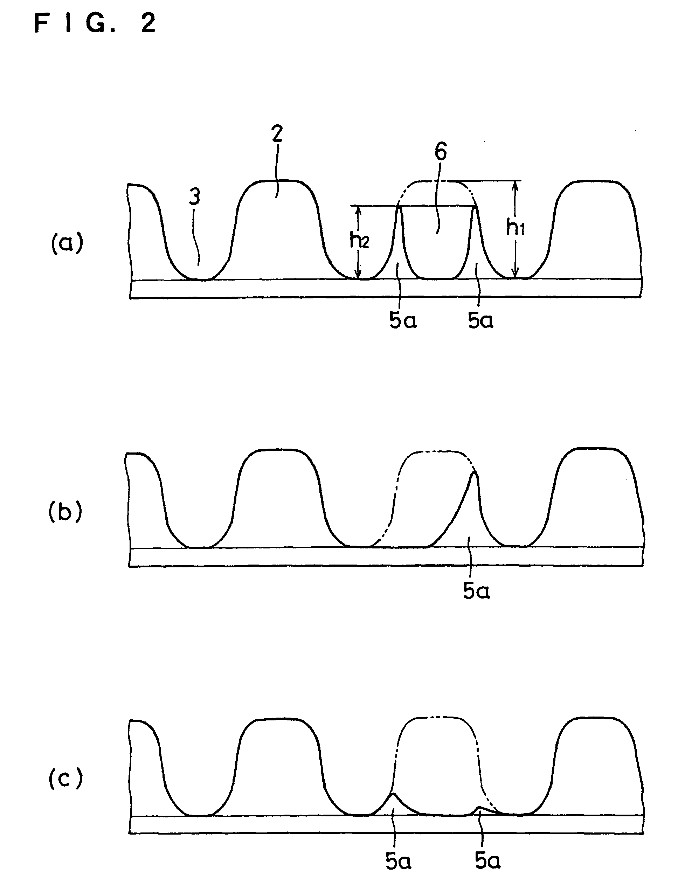

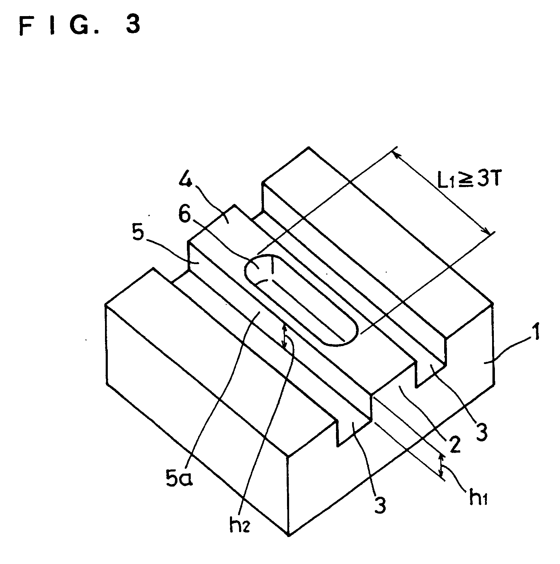

The optical recording medium of this invention is described below in detail by showing its first embodiment in Figs. 1 and 2 and its second embodiment in Fig. 3. It should, however, be noted that the invention is by no means intended to those embodiments.

### [Optical recording medium according to the first embodiment]

Fig. 1 shows schematically the essential part of a light-transmissive substrate to be used in an optical recording medium according to the first embodiment of the invention. Fig. 2 shows schematically cross sections of three substrates having a land-groove structure.

In Fig. 1, the light-transmissive substrate to be used in the optical recording medium of the invention is generally indicated by 1 and on this substrate, grooves 3 and lands 2 defined by such grooves 3 are formed alternately in a circumferential direction. The light-transmissive substrate 1 having such a land-groove structure is overlaid with a recording layer and a reflective layer which, in turn, may optionally be overlaid with a protective layer (the layers are not shown).

Each of the lands 2 is generally rectangular or trapezoidal in cross section having a top surface 4 and sidewalls 5 and has a height (land height) of h₁.

In the present invention, each land 2 has a prepit (land prepit) 6 formed in the center area of the land in a width direction thereof. In the optical recording medium according to the first embodiment of the invention, the prepit 6 is formed in such a way that the lower part of each sidewall 5 of the land is left intact with a specified height (h₂) to form a boundary wall 5a between the prepit and the adjacent groove 3. The ratio of the height of the boundary wall 5a, which is equal to the residual land height (h₂), to the land height (h₁) is 0.25 - 0.80 (on average). By adjusting the value of h₂/h₁ to lie within the aforementioned range, prepit signals can be detected consistently and groove signals can be recorded and reproduced effectively.

The values of h₁ which is the land height, and h₂, or the height of the residual land (i.e., the boundary wall 5a between prepit and groove), must satisfy the relation of h₂/h₁ = 0.25 - 0.80 (on average) and this means that the two boundary walls 5a, 5a facing the grooves 3, 3 adjacent the land 2 must both have a height 0.25 - 0.80 times the land height (h₁).

In the present invention, the prepit 6 is not offset in the land but is formed in the center area of the land 2 in a width direction thereof and, as a result, such prepit can be formed that has boundary walls 5a, 5a of substantially the same height each other. In order to detect prepit signals consistently or to reproduce groove signals of high quality, the heights of the two boundary walls 5a, 5a are preferably the same or the difference should be as small as possible. Considering the actual manufacturing practices, it is preferred for the purposes of the invention that the difference between the heights of the two boundary walls 5a, 5a is held within the range of from zero to ± 20%.

In the present invention, the height (h₁) of the land 2 represents the difference in height between the bottom surface of the groove 3 and the top surface 4 of the land 2.

The height of boundary wall 5a (h₂) defining prepit 6 represents the difference in height between the bottom surface of the groove 3 and the top edge of the sidewall 5a of the remaining part of the land. The prepit 6 is usually formed in such a way that its bottom surface is generally flush with the bottom surface of the groove 3, so the height (h₂) of the boundary wall 5a is substantially the same as the difference in height between the bottom surface of the prepit 6 and the top edge of the sidewall 5a of the remaining part of the land.

In the case of a disc having wobbled grooves, the land between two wobbled grooves varies slightly in width. This can cause variations in the position of prepits to such an extent that they depart somewhat from the desired position which is in the center area of the land in a width direction thereof. Even in this case, the two boundary walls 5a should have a height 0.25 - 0.80 times the height of the land.

The ratio of h₂/h₁ is preferably 0.35 - 0.80, more preferably 0.45 - 0.75.

If a prepit is not defined by boundary walls, it will connect to adjacent grooves and prepit signals will cause undesirably large effects on the quality of the signals recorded in the grooves, whereby causing errors in reproducing signals to result in uncorrectable error. If the recorded signals are video signals, "uncorrectable error" means skipping of a portion of the desired image to produce a mosaic pattern or an erratic playback operation which in the worst case will stop completely.

If any prepit defining boundary walls have heights less than 0.25 times the height of the land, undesirably large effects will be caused on record/playback signals as is the case of having no boundary walls. If the height of the boundary walls is greater than 0.80 times the height of the land, the output of prepit signals decreases so much that if the prepits are short in length, consistent detection of address signals is difficult.

When data signals are recorded to an optical recording medium having a land-groove structure, the prepits in a land are operatively associated with either of two grooves adjacent to the land. For example, data are recorded into the groove by causing a laser beam to track it while detecting address information from the prepits in the land adjacent to either side of the groove.

Therefore, if prepits are off-centered at either inner or outer area of the land in a radius direction of the disc, signals to be recorded in a groove adjacent to one side of the land toward which side the prepits are offset, are affected by the prepits so greatly that only incomplete pits are formed in the groove and playback signals from the groove are affected by an undesirably large degree.

Consider, for example, an optical recording medium that records groove signals while detecting prepit signals from a land that locates at inner side of the groove in a radius direction of a disc.

To record groove signals, a laser beam is spot irradiated. If a prepit is off-centered or offset at inner area of the land in a radius direction of the disc, the position of the prepit in the land, said prepit is required in recording groove signals, is away from the groove by a distance equal to that offset, and that the area of detection prepit occupied in the laser-spot-irradiated area decreases by the corresponding offset amount, making it difficult to detect prepit signals effectively so that address information can be read only inconsistently during recording to cause adverse effects on the recording operation. A further problem arises from the fact that a prepit formed in the other land adjacent to the other side of the groove, i.e., outer land, which is not required for signal detection is formed in an offset position closer to the recording groove of interest, and therefore, the area of non-detection prepit occupied in the laser-spot-irradiated area increases by the corresponding offset amount, and pits are incompletely formed into which the groove signals are to be recorded, making it difficult to accurately reproduce signals from pits.

If a prepit is off-centered or offset at outer area of the land in a radius direction of the disc, the aforesaid groove, i.e., the groove that adjacent to inner side of the land in a radius direction, is closer to the groove by a distance equal to that offset; although the output of prepit signals is adequate, the area of non-detection prepit occupied in the laser-spot-irradiated area increases, and pits are incompletely formed into which the groove signals are to be recorded, making it difficult to accurately reproduce signals from pits. It should, however, be noted that the prepits in the land adjacent to the other side of the land, i.e., inner side of the land, said prepit is not required to detect signals, is away from the recording groove, and therefore said non-detection prepit will cause no adverse effects during recording.

To form prepits in a land such that the boundary walls of each prepit have the same height as the land is ideal for the purpose of recording and reproducing groove signals accurately. In such cases, however, the prepit width has to be reduced and this causes various problems in the fabrication of discs such as the limitations of irradiation of laser beam during exposure in the making of a master disc and the difficulty involved in forming prepits of the intended shape. These difficulties increase with increasing recording density.

Considering these facts, the optical recording medium shown in Fig. 2(a) forms a prepit 6 in a land 3 in such a way that a boundary wall 5a on each side of the land satisfies the relation of h₂/h₁ = 0.25 - 0.80, and as a result, satisfactory signal reproduction is performed to bring about the intended advantages of the invention. In Fig. 2(b), a boundary wall is formed on only one side of the land and in Fig. 2(c), the boundary walls on both sides of the land are unduly low in height; either case shows the formation of land prepits in optical recording media which are outside the scope of the present invention and the intended advantages of the invention cannot of course be attained.

In the optical recording medium according to the first embodiment of the invention, the length of prepits to be formed is not limited to any particular value but it is preferably less than 3T, more preferably in a range of about 1T - 2T [T: (1/channel bit rate) x the reference linear velocity].

Thus, in the optical recording medium according to the first embodiment of the invention, by forming prepits satisfying the stated height requirement in a land in an area at the center in a width direction thereof, the inconveniences caused in the prior art due to the formation of land prepits in offset positions are eliminated, and groove signals of high quality can be recorded and reproduced while making it possible to reproduce high-quality signals from the prepits.

If prepits having smaller width than a land are formed in the land in its central area in such a way that boundary walls are substantially equal in height to the land, not only is it difficult to make a stamper as a prepit forming mold but the moldability of prepits is also limited to lower the production rate of the optical recording medium. As a further problem, small prepits can lead to the reproduction of lower-quality signals from the prepits. These inconveniences are eliminated by the present invention.

The light-transmissive substrate which has prepits formed in the manner described above and which is to be used in an optical recording medium according to the first embodiment of the invention can be prepared by any known techniques. A preferred procedure is described below.

A photoresist layer (about 0.2 µm thick) is provided onto a glass disc about 0.6 mm thick and selectively irradiated a laser beam thereto. Stated specifically, a cutting laser beam is passed through a half-mirror so that it is split into two beamlets that will focus at different positions. By means of an optical modulator, one beamlet is supplied with wobble signals and used to form grooves and the other beamlet is supplied with input signals for land prepit formation. Using these beamlets, one can pattern the photoresist layer to form grooves and land prepits simultaneously.

After developing the pattern, a conductive metal film is formed on the disc surface by sputtering or some other suitable method. A metal layer such as Ni layer is provided onto the conductive film and later stripped from the glass disc. After post-treatments including removal of the unwanted photoresist layer, the glass disc is blanked in a specified shape to make a stamper.

Using the stamper, a transparent resin is injection molded or a light-transmissive member is processed by the 2P method to produce a light-transmissive substrate having grooves and land prepits formed in a specified pattern. Transparent resins may be thermoplastic and exemplified by polycarbonates and polyolefins. Care must be taken to insure that the resin temperature or the mold temperature is not unduly low or that the mold opening/closing pressure is not unduly small; otherwise, the resin moldability decreases to such an extent that the resin will not flow sufficiently to fill every fine details of the stamper and the height of boundary walls between land and groove will fluctuate, making it difficult to insure the desired value.

As will be understood from the above, the shape and other features of land prepits contribute much to the production of a stamper, so the spot diameter and quantity of the exposing laser beam used to cut a prepit pattern into the photoresist layer must be adjusted with close tolerances to make a stamper having the desired prepit pattern. In addition, by proper adjustment of the optical axis, a prepit pattern can positively be formed in an inter-groove land at the center area in a width direction thereof.

### [Optical recording medium according to the second embodiment]

Fig. 3 shows schematically the essential part of a light-transmissive substrate to be used in an optical recording medium according to the second embodiment of the invention. As is clear from Fig. 3, grooves 3 and lands 2 defined by such grooves 3 are formed alternately on a light-transmissive substrate 1 in a circumferential direction. The light-transmissive substrate 1 having such a land-groove structure is overlaid with a recording layer and a reflective layer which, in turn, may optionally be overlaid with a protective layer (the layers are not shown).

Each of the lands 2 is generally rectangular or trapezoidal in cross section having a top surface 4 and sidewalls 5 and has a height (land height) of h₁.

Each land 2 has a prepit (land prepit) 6 formed in the center area of the land in a width direction thereof. In the optical recording medium according to the second embodiment of the invention, the prepit 6 is formed in such a way that its length L₁, or the length in peripheral direction in which the medium rotates, is no less than 3T [T: (1/channel bit rate) x the reference linear velocity].

Preferably, the prepit 6 is formed in such a way that a boundary wall 5a exists to separate it from the adjacent groove 3 on each side. The height of the boundary wall 5a is not limited to any particular value but in the present invention, the ratio of its height h₂ to the land height h₁ is preferably greater than 0.80. The upper limit of h₂/h₁ is preferably equal to one (i.e., h₂ = h₁).

The key parameter T in the definition of the prepit length L₁ means the reciprocal of the channel bit rate. In the DVD family, the channel bit rate is typically 26.16 Mbps and its reciprocal is 38.226 ns which is defined as 1T.

The value of T depends on the linear velocity in the record/playback mode (which is commonly called the "reference linear velocity"). Current models of DVD-R have two capacities, 3.95 GB and 4.7 GB, for the same disc area.

The 3.95 GB disc has a reference linear velocity of 3.84 m/s and the value of 1T as calculated by 3.84 x 38.226 (nm) is about 0.1468 µm; hence, the value of 3T is about 0.44 µm.

The 4.7 GB disc has a reference linear velocity of 3.49 m/s and the value of 1T as calculated by 3.49 x 38.226 (nm) is about 0.13334 µm; hence, the value of 3T is about 0.40 µm.

Therefore, according to the invention, land prepits are formed on the 3.95 GB disc such that their length L₁ is at least about 0.44 µm and in the case of the 4.7 GB disc, L₁ is at least about 0.40 µm.

Conventionally, prepits are formed in such a length as to enable the recording of 2T signals which form the shortest pit. Therefore, the length of conventional prepits has been approximately equal to or slighter greater than 2T.

If prepits are formed in a land at the center area in a width direction thereof such that the prepit width does not exceed the land width but two sides of it remain intact to define a boundary wall between the prepit and each adjacent groove, the height of the boundary wall h₂ is equal to the height of the land h₁. Adjusting the height of the boundary wall to be equal to the height of the land is ideal for the purpose of recording and reproducing groove signals accurately. On the other hand, high boundary walls prevent the reproduction of high-quality prepit signals and the signals reproduced from the prepits deteriorate in quality. The need to form small land prepits is another factor in deteriorating the quality of signals reproduced from the land prepits.

In the optical recording medium according to the second embodiment of the invention, land prepits are formed to be longer than 3T and this solves the aforementioned problems of the prior art due to the adjustment of prepit length to about 2T and prepit signals of high quality can be reproduced even if the boundary wall of each prepit between land and each adjacent groove is as high as the land and even if the prepit width is small.

In the present invention, the upper limit of land prepit length L₁ is not limited to any particular value as long as it is 3T or more. As the prepit length increases, it becomes easier to detect reproduction signals from the prepit. However, if the prepit is unduly long, there is an increased chance for the occurrence of crosstalk with recorded signals in adjacent grooves and an offset in phase from wobbling is also likely to occur. To the extent that no such inconveniences occur, the length of land prepits has no particular upper limit.

In the present invention, the height of boundary walls need not be the same as the land height. Consistent detection of prepit signals and effective recording and reproduction of groove signals can be accomplished if h₂/h₁ is greater than 0.8. In other words, the intended advantages of the invention can still be attained even if the upper edge of a land is nicked in the process of forming prepits.

In the present invention, the height (h₁) of the land 2 represents the difference in height between the bottom surface of the groove 3 and the top surface 4 of the land 2.

The height of boundary wall 5a (h₂) defining prepit 6 represents the difference in height between the bottom surface of the groove 3 and the top edge of the sidewall 5a of the remaining part of the land. The prepit 6 is usually formed in such a way that its bottom surface is generally flush with the bottom surface of the groove 3, so the height (h₂) of the boundary wall 5a is substantially the same as the difference in height between the bottom surface of the prepit 6 and the top edge of the sidewall 5a of the remaining part of the land.

In the case of a disc having wobbled grooves, the land between two wobbled grooves varies slightly in width. This can cause variations in the position of prepits to such an extent that they depart somewhat from the desired position which is at the center area of the land in a width direction thereof. Even in this case, the prepit length should not be smaller than 3T and the two boundary walls 5a have preferably a height more than 0.80 times the height of the land.

If a prepit is not defined by boundary walls, it will connect to adjacent grooves and prepit signals will cause undesirably large effects on the quality of the signals recorded in the grooves, whereby causing errors in reproducing signals to result in uncorrectable error. If the recorded signals are video signals, "uncorrectable error" means skipping of a portion of the desired image to produce a mosaic pattern or an erratic playback operation which in the worst case will stop completely.

If any prepit defining boundary walls have unduly small heights compared to the land, undesirably large effects will be caused on record/playback signals as if there were no boundary walls at all. The optical recording medium according to the second embodiment of the invention enables consistent detection of address information even if the height of boundary walls is substantially equal to the land height.

In the optical recording medium according to the second embodiment of the invention, prepits are formed in a land in an area which is generally at the center of its width to leave boundary walls intact on both sides of the land at a height preferably almost equal to the land height and over a length (L₁) greater than 3T. As a result, groove signals of high quality can be recorded and reproduced and, in addition, high-quality signals can be reproduced from prepits. The present invention thus eliminates the problems with the conventional practice of forming short prepits (e.g., deterioration in the quality of prepit signals reproduced).

A light-transmissive substrate which has prepits formed in the manner described above and which is to be used in an optical recording medium according to the second embodiment of the invention can be prepared by the same procedure as used to make the light-transmissive substrate for the optical recording medium according to the first embodiment.

### [Recording layer]

The thus prepared light-transmissive substrate having a land-groove structure is subsequently overlaid with a recording layer. There is no particular limitation on the recording layer and any types can be employed, including an organic dye based recording layer and a phase-change based recording layer.

In forming the organic dye based recording layer, common organic dye components which are conventionally used in this type of recording layer can be employed, as exemplified by cyanine dyes, phthalocyanine dyes and azo dyes. In the present invention, organic dyes having a maximum absorption wavelength (λₘₐₓ) of 400 - 700 nm in thin film are preferably used either alone or in combination. Most of these are dye components used in DVD-R and other members of the DVD family to perform data recording and reproduction from the recording layer.

Speaking of maximum absorption, as long as the optical media are concerned, absorption spectra in thin film are important. The term "maximum absorption wavelength (λₘₐₓ) in thin film" as used in the invention means a maximum absorption wavelength as measured for a particular organic dye after it is formed in a thin-film recording layer. Maximum absorption spectra of dyes in thin film behave differently than maximum absorption spectra in solution having the same dyes dissolved in a solvent.

Maximum absorption spectra in thin film can be measured by the following non-limiting exemplary method. In the first step, a dye of interest is dissolved in an organic solvent at a concentration of 1 - 20 wt% and the solution is spin coated onto a groove- or pit-less flat PC plate to form a film about 60 - 200 nm thick with care being taken not to provide any particular orientation and the applied film is dried at 50 - 70 °C. The organic solvent is preferably of a type that is capable of dissolving the dye and which has a boiling point of 50 - 150 °C in air atmosphere. If the dye undergoes excessive crystallization or association as the solvent evaporates during spin coating, a different solvent should be chosen. After thusly forming the thin dye film on the flat PC plate, transmission and absorption spectra are usually measured with a spectrophotometer.

The organic dye component to be used in the present invention is at least one member of the group essentially consisting of trimethinecyanine dyes represented by the following general formula (I) and dye-metal chelate compounds (metal-containing azo dyes) represented by the following general formula (II) 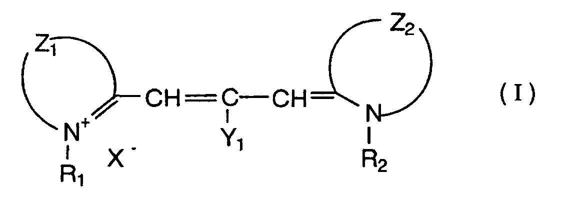 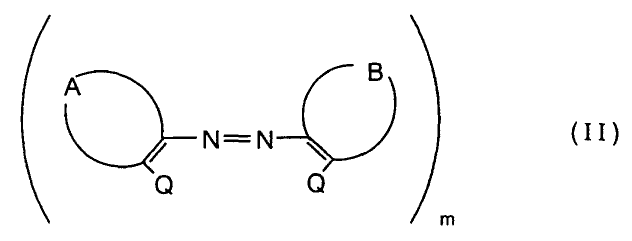 wherein the respective symbols have the following definitions :
R₁ and R₂ represent each independently a substituted or unsubstituted alkyl group having 1 - 6 carbon atoms, preferably 1 - 5 carbon atoms, or a substituted or unsubstituted alkenyl group having 1 - 6 carbon atoms, preferably 1 - 5 carbon atoms; a preferred substituted alkyl group is an alkoxyalkyl group; in a particularly preferred case of the invention, R₁ and R₂ are each a straight-chained or branched alkyl or alkoxyalkyl group having 1 - 5 carbon atoms;
Z₁ and Z₂ represent each independently a 5- or 6-membered heterocycle or an atomic group capable of forming a condensed ring containing a 5- or 6-membered heterocycle; specific examples of Z₁ and Z₂ include an indolenine ring represented by the following formula (V), an α-naphthoindolenine ring represented by the following formula (VI), a β-naphthoindolenine ring represented by the following formula (VII), a benzothiazole ring represented by the following formula (VIII), an α-naphthothiazole ring represented by the following formula (IX), a β-naphthothiazole ring represented by the following formula (X), and a benzoselenazole ring represented by the following formula (XI); the nuclei of these rings may be substituted by a halogen atom, an alkyl group (-R) or an alkoxyalkyl group (-OR) having 1 - 4 carbon atoms, a nitro group (NO₂), a sulfonyl group (SO₃H), a phenyl group (C₆H₅) and the like; another preferred example is a benzene ring substituted by a dialkylamino group represented by the following formula (XII) (wherein R's represent each independently an alkyl group having 1 - 3 carbon atoms); 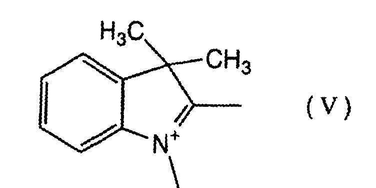 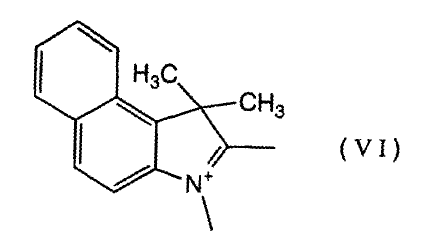 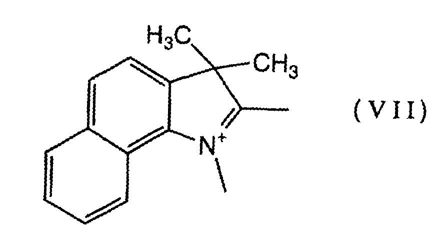 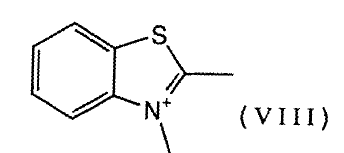 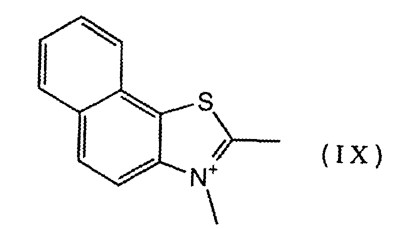 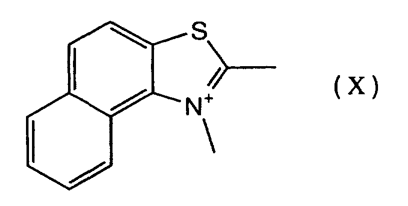 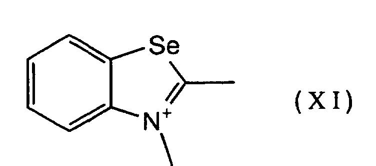 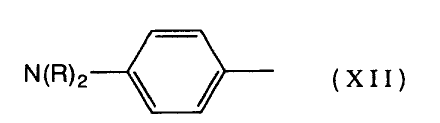
Y₁ represents a hydrogen atom, a halogen atom or an alkyl group having 1 or 2 carbon atoms, with a hydrogen atom being preferred in the invention;
X represents a monovalent anion and specific examples include PF₆⁻, ClO₄⁻, BF₄⁻, I⁻, etc.;
A and B represent each independently an atomic group which, together with the two carbon atoms to which they each are bound, forms an aromatic ring or a condensed ring that may have the same or different substituents;
at least one of A and B is preferably a nitro- or dinitrobenzene ring selected from the following formulae (XIII-1) - (XIII-4): 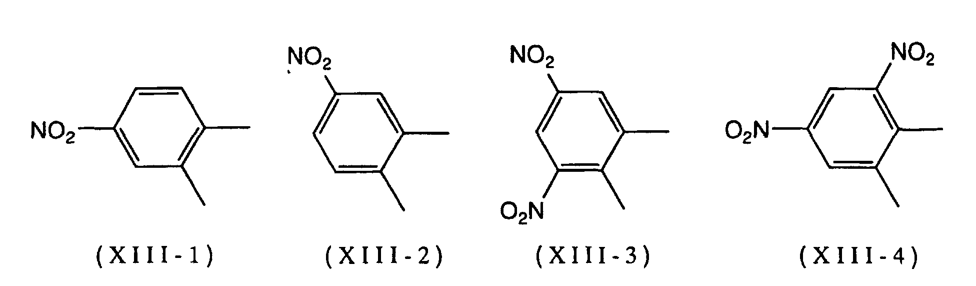
the other of A and B is preferably exemplified by a dialkylaminobenzene ring represented by the following formula (XIV) (wherein R's represent each independently an alkyl group having 1 - 4 carbon atoms), a diphenylamine ring represented by the following formula (XV), a morpholinobenzene ring represented by the following formula (XVI), and a dinonylbenzene ring represented by the following formula (XVII): 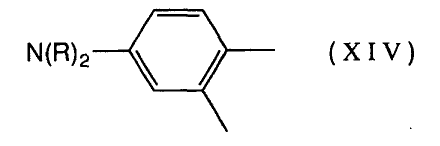 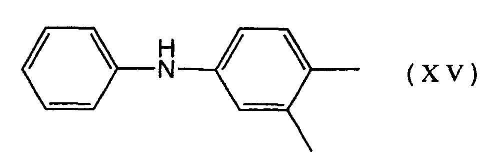 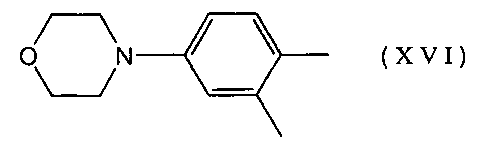 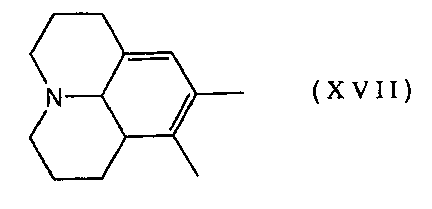
Q is a group having active hydrogen and specific preferred examples include OH, COOH, NH₂, etc.;
m represents a number of 1 or 2, with 2 being preferred in the present invention.

As a preferred example of the trimethinecyanine dye represented by the general formula (I), a compound represented by the following formula (XVIII) may specifically be mentioned:

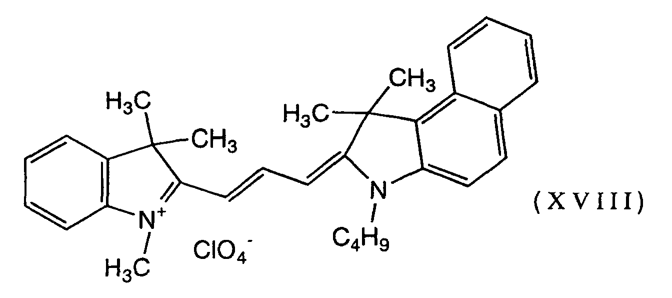

Referring to the dye-metal chelate compound (metal-containing azo dye) represented by the general formula (II), the metal is preferably mono- or divalent and specific examples include Ni, V, Cu and Zn. Depending on the metal moiety, the chelate compound (metal-containing azo dye) may, taken as a whole, be negatively charged. If this is anticipated, forming a salt with an alkali metal such as Na⁺ or a positively charged dye such as rhodamine dye, triphenylmethane dye or trimethinecyanine dye is preferred from such viewpoints as the electrical characteristics and lightfastness of the disc. As a preferred example of the dye-metal chelate compound (metal-containing azo dye) represented by the general formula (II), a compound represented by the following formula (XIX) may specifically be mentioned:

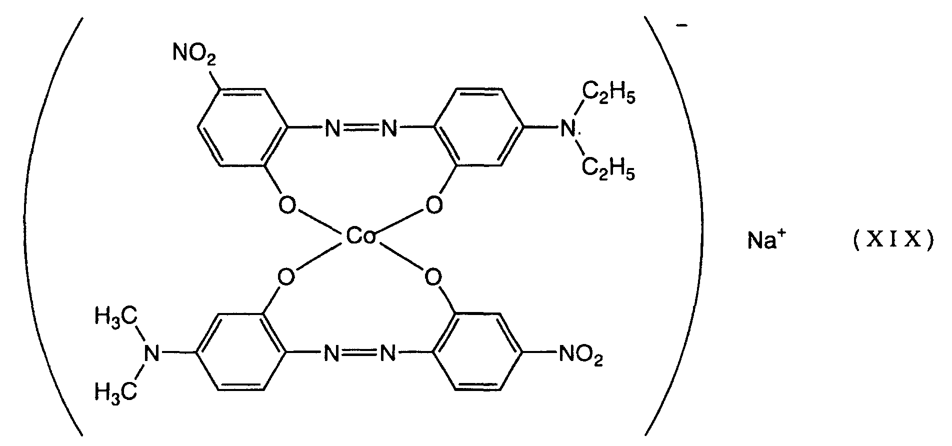

The organic dye component described above is dissolved in a suitable solvent and the solution is spin coated to the light-transmissive substrate and dried to form an organic dye layer having the desired thickness. The dye layer can also be formed by methods other than spin coating, as exemplified by spray coating, screen printing, dipping and even vapor deposition. The thickness of the dye layer to be formed should be determined as appropriate for the dye used.

If spin coating is to be applied, the dye component is dissolved in a solvent to form an applicable organic dye solution. The solvent to be used should be capable of dissolving the dye adequately while causing no adverse effects on the light-transmissive substrate. The concentration of the dye component in the solution is preferably in the range of about 0.01 - 10 wt%.

Exemplary solvents include: alcoholic solvents, such as methanol, ethanol, isopropylalcohol, octafluoropentanol, allyl alcohol, methyl cellosolve, ethyl cellosolve and tetrafluoropropanol; aliphatic or alicyclic hydrocarbon solvents, such as hexane, heptane, octane, decane, cyclohexane, methylcyclohexane, ethylcyclohexane and dimethylcyclohexane; aromatic hydrocarbon solvents, such as toluene, xylene and benzene; halogenated hydrocarbon solvents, such as carbon tetrachloride, chloroform, tetrachloroethane and dibromoethane; ether solvents, such as diethyl ether, dibutyl ether, diisopropyl ether and dioxane; ketonic solvents, such as 3-hydroxy-3-methyl-2-butanone; ester solventsl, such as ethyl acetate and methyl lactate; and water. From this list, those solvents which do not attack the substrate material may be chosen and used either independently or in admixture.

The thickness of the organic dye layer is not limited to any particular value and it is preferably in the range of about 10 - 300 nm, more preferably of about 60 - 250 nm.

The organic dye layer is then overlaid with a reflective layer. The reflective layer is made of a material capable of reasonably high reflection at the wavelength of reproducing light, as exemplified by Au, Ag, Cu, A1, Ni, Pd, Cr and Pt. These elements may be used either independently or in alloy form. The following metals and semimetals may additionally be contained in the reflective layer: Mg, Se, Hf, V, Nb, Ru, W, Mn, Re, Fe, Co, Rh, Ir, Zn, Cd, Ga, In, Si, Ge, Te, Pb, Po, Sn and Bi.

The reflective layer may be formed by various methods including sputtering, ion plating, chemical vapor deposition and vacuum evaporation but these are not the only methods that can be employed. In order to improve the reflectance and recording characteristics, a known inorganic or organic intermediate layer or adhesive layer may be provided on top of the substrate or under the reflective layer. The thickness of the reflective layer is not limited to any particular value and is preferably in the range of about 10 - 300 nm, more preferably about 80 - 200 nm.

The reflective layer is usually overlaid with a protective layer. Alternatively, two media may be bonded together. As long as it is capable of protecting the reflective layer from external forces, the protective layer may be formed of any materials including organics and inorganics. Exemplary organic materials include thermoplastic resins, thermosetting resins and UV curable resins. Exemplary inorganic materials include SiO₂, SiN₄, MgF₂ and SnO₂. Thermoplastic and thermosetting resins are dissolved in suitable solvents to form coating solutions which are applied and dried to form the protective layer. UV curable resins are applied either on their own or in the form of a coating solution in a suitable solvent and then cured by irradiation with UV light. Exemplary UV curable resins are acrylate resins such as urethane acrylate, epoxy acrylate and polyester acrylate. These materials may be used either independently or in admixture. The protective layer may consist of one or more sub-layers.

As in the case of the recording layer, the protective layer may be formed by coating techniques such as spin coating and casting, as well as non-coating techniques such as sputtering and chemical vapor deposition.

With a view to enhancing the resistance to surface damage and moisture, the protective layer may also be applied to the side of the light-transmissive substrate on which light is incident.

If the recording layer is of a type that performs recording by phase change, known phase-change based recording materials such as a Ag-In-Sb-Te system and a Ge-Te-Sb system may be used to form a multi-layered structure on the light-transmissive substrate which comprises a dielectric layer, a barrier layer, a (phase-change) based recording layer, a dielectric layer and a reflective layer. The recording layer is overlaid with an organic protective layer formed of a UV curable acrylic resin.

If desired, two of the discs thus produced are bonded together, with the light entrance side facing outward . Alternatively, one of such discs and another disc having a different layered structure may similarly be bonded together. The bonding adhesive may be a hot-melt adhesive, a UV curable adhesive, a heat-curable adhesive and a pressure-sensitive adhesive and using these adhesives, two discs are bonded together by suitable methods such as roll coating, screen printing and spin coating. In the case of DVD-R, overall considerations including operating efficiency, production rate and disc characteristics dictate bonding two discs by screen printing or spin coating using a UV curable adhesive.

After producing the optical recording medium of the invention by the above method, information is typically recorded in the following manner.

First, the optical recording medium rotating at a constant linear or angular velocity is irradiated with recording light such as a semiconductor laser beam that is applied from the substrate side. This irradiation with the recording light changes the reflectance of light from the recording layer.

A semiconductor laser beam having a wavelength in the range of 400 - 660 nm is used as the recording light. To reproduce the recorded information, the optical recording medium while rotating at a constant linear or angular velocity is irradiated with the semiconductor laser beam that is applied from the substrate side and the difference in the quantity of reflected light is detected.

In the present invention, prepits having boundary walls of a specified height are formed in a land in an area generally at the center of its width and this eliminates the inconveniences experienced when prepits were formed in an area offset toward either side of the land; as a result, prepit signals can be detected consistently and even if high-density recording is done, data signals can be reproduced effectively without errors.

### EXAMPLES

The following examples are provided for the purpose of further illustrating the present invention but are in no way to be taken as limiting.

The light-transmissive substrates used in the following examples and comparative examples were prepared by known methods using an argon laser in such a way that the main beam cut prepits into lands in operative association with the cutting of grooves by the sub-beam. Adjustment of the main beam's power varied the amount of exposure and, hence, the height of boundary walls on opposite sides of each land prepit. The length of prepits was varied by adjusting the duration of exposure time.

### [LPP signal characteristics]

In accordance with DVD Specifications for Recordable Disc (DVD-R) Part 1, PHYSICAL SPECIFICATIONS, measurement was effected with DVR-S101 (Pioneer Corp.) and the results were evaluated in terms of LPP_{b} error. The smaller the value of LPP_{b} errors, the more accurate is the detection and decoding of LLP signals, providing sufficiently correct control information such as absolute address to achieve normal recording operations. The greater the value of LPP_{b} errors, the smaller the chance of detecting LLP signals effectively, making it difficult to achieve normal recording operation.

### (Rating)

Good: 3% > LPP_{b} error
Fair: 5% > LPP_{b} error ≥ 3%
Poor: LPP_{b} error ≥ 5%

### [PI error]

To determine the extent by which the recorded signals on the disc would be affected by prepits, PI error evaluation was performed. Using DDU-1000 (Pulsetec Industrial Co., Ltd.), EFM+ signals (8-16 signals) were recorded to each sample of optical recording medium with an optimum recording laser power (Po) at a linear velocity of 3.5 m/sec and the results were evaluated by averaging five measurements. To decode PI errors, M-5298E (Kenwood Corp.) was used.

### EXAMPLE 1

A polycarbonate disc of 120 mm diameter, 0.6 mm thick having wobbled tracking grooves and prepits that were formed in the lands defined by the grooves was used as a light-transmissive substrate. The land prepits were formed in such a way that the height (h₂) of the boundary walls on opposite sides was 0.45 times as large as the height of the land (h₁). Each land prepit had a length of 2T = 0.26 µm.

To provide the recording layer, a trimethinecyanine dye represented by the formula (XVIII) and a metal-containing azo dye represented by the formula (XIX) were mixed in proportions of 4:6 and dissolved in tetrafluoropropanol to make a 4% coating solution, which was spin coated to the light-transmissive substrate to give a dry thickness of 80 nm.

To provide a light reflecting layer on the organic dye based recording layer, a Ag layer was formed in an average thickness of 190 nm by sputtering with dc magnetron sputter equipment, CD-Coat 1200 (Shibaura Co., Ltd.)

In the next step, the light reflecting layer was spin coated with a UV curing agent SD-318 (Dainippon Ink and Chemicals, Inc.) to give a thickness of 6 µm and the applied coating was cured by irradiation with UV irradiation equipment to form a protective layer.

An additional disc was prepared by superposing the light-transmissive substrate with an organic dye based recording layer, light reflecting layer and protective layer in the manner described above. After coating the protective layer of each disc with a UV curing resin SK7000 (Sony Chemical Corporation) by screen printing, the two discs were bonded together, with their protective layers facing each other as they were exposed to UV light. This completes the process of fabricating an optical recording medium.

### EXAMPLE 2

An optical recording medium was fabricated by repeating the procedure of Example 1, except that the height of the boundary walls on opposite sides of each land prepit was 0.25 times the height of the land.

### EXAMPLE 3

An optical recording medium was fabricated by repeating the procedure of Example 1, except that the height of the boundary walls on opposite sides of each land prepit was 0.35 times the height of the land.

### EXAMPLE 4

An optical recording medium was fabricated by repeating the procedure of Example 1, except that the height of the boundary walls on opposite sides of each land prepit was 0.75 times the height of the land.

### EXAMPLE 5

An optical recording medium was fabricated by repeating the procedure of Example 1, except that the height of the boundary walls on opposite sides of each land prepit was 0.80 times the height of the land.

### EXAMPLE 6

An optical recording medium was fabricated by repeating the procedure of Example 1, except that the organic dye based recording layer was replaced by a phase-change based recording layer of a Ag-In-Sb-Te system.

### COMPARATIVE EXAMPLE 1

An optical recording medium was fabricated by repeating the procedure of Example 1, except that the height of the boundary walls on opposite sides of each land prepit was 0.20 times the height of the land.

### COMPARATIVE EXAMPLE 2

An optical recording medium was fabricated by repeating the procedure of Example 1, except that the height of the boundary walls on opposite sides of each land prepit was 0.90 times the height of the land.

### COMPARATIVE EXAMPLE 3

An optical recording medium was fabricated by repeating the procedure of Example 1, except that the height of the outer boundary wall defining the land prepit was 0.45 times the height of the land whereas the height of the inner boundary wall was 0.20 times as large.

### COMPARATIVE EXAMPLE 4

An optical recording medium was fabricated by repeating the procedure of Example 1, except that the height of the outer boundary wall defining the land prepit was 0.20 times the height of the land whereas the height of the inner boundary wall was 0.45 times as large.

The optical recording media fabricated in Examples 1 - 6 and Comparative Examples 1 - 4 were evaluated for LPP signal characteristics and PI errors by the methods already described above. The results are shown in Table 1.

**Table 1**

| | Height of Inner boundary wall relative to Land height | Height of Outer boundary wall relative to Land height | LPP signal characterist ics | PI error value (max value) |
|---|---|---|---|---|
| Example 1 | 0.45 | 0.45 | good | 50 |
| Example 2 | 0.25 | 0.25 | good | 135 |
| Example 3 | 0.35 | 0.35 | good | 90 |
| Example 4 | 0.80 | 0.80 | good | 25 |
| Example 5 | 0.75 | 0.75 | good | 30 |
| Example 6 | 0.45 | 0.45 | good | 10 |
| Comparative Example 1 | 0.20 | 0.20 | good | 450 |
| Comparative Example 2 | 0.90 | 0.90 | fair | 20 |
| Comparative Example 3 | 0.20 | 0.45 | good | 320 |
| Comparative Example 4 | 0.45 | 0.20 | good | 350 |

### EXAMPLE 7

A polycarbonate disc of 120 mm diameter, 0.6 mm thick having wobbled tracking grooves and prepits that were formed in the lands defined by the grooves was used as a light-transmissive substrate. The land prepits were formed in such a way that they were 3T long and that the height (h₂) of the boundary walls on opposite sides was the same as the height of the land (h₁).

To provide the recording layer, a trimethinecyanine dye represented by the formula (XVIII) and a metal-containing azo dye represented by the formula (XIX) were mixed in proportions of 4:6 and dissolved in tetrafluoropropanol to make a 4% coating solution, which was spin coated to the light-transmissive substrate to give a dry thickness of 70 nm.

To provide a light reflecting layer on the organic dye based recording layer, a Ag layer was formed in an average thickness of 190 nm by sputtering with dc magnetron sputter equipment, CD-Coat 1200 (Shibaura Co., Ltd.).

In the next step, the light reflecting layer was spin coated with a UV curing agent SD-318 (Dainippon Ink and Chemicals, Inc.) to give a thickness of 6 µm and the applied coating was cured by irradiation with UV irradiation equipment to form a protective layer.

An additional disc was prepared by superposing the light-transmissive substrate with an organic dye based recording layer, light reflecting layer and protective layer in the manner described above. After coating the protective layer of each disc with a UV curing resin SK7000 (Sony Chemical Corporation) by screen printing, the two discs were bonded together, with their protective layers facing each other as they were exposed to UV light. This completes the process of fabricating an optical recording medium.

### EXAMPLE 8

An optical recording medium was fabricated by repeating the procedure of Example 7, except that the land prepits were 4T long.

### EXAMPLE 9

An optical recording medium was fabricated by repeating the procedure of Example 7, except that the land prepits were 6T long.

### COMPARATIVE EXAMPLE 5

An optical recording medium was fabricated by repeating the procedure of Example 7, except that the land prepits were 2T long.

### COMPARATIVE EXAMPLE 6

An optical recording medium was fabricated by repeating the procedure of Example 7, except that the land prepits were 1T long.

The optical recording media fabricated in Examples 7 - 9 and Comparative Examples 5 and 6 were evaluated for LPP signal characteristics and PI errors by the methods already described above. The results are shown in Table 2.

**Table 2**

| | LPP signal characteristics | PI error value (max value) |
|---|---|---|
| Example 7 | good | 20 |
| Example 8 | good | 30 |
| Example 9 | good | 50 |
| Comparative Example 5 | fair | 10 |
| Comparative Example 6 | poor | 10 |

### Industrial Applicability

As described above, the present invention provides an optical recording medium which permits address information and disc rotation control information to be accessed accurately even if the track pitch is small and which still can be manufactured efficiently with the added capability of signal recording in high density and reproduction of high-quality signals.

## Claims

1. An optical recording medium having at least a recording layer provided on a light-transmissive substrate having grooves and lands with prepits, wherein said lands are generally rectangular or trapezoidal in cross section having a top surface and sidewalls, as well as a specified land height (h₁), and said prepits are formed in a land in the center area of the land in a width direction thereof, and spaced from the adjacent grooves by boundary walls of a specified height (h₂).

2. The optical recording medium according to claim 1, wherein the lower part of each sidewall of the land is left intact with a specified height (h₂) to form said boundary walls such that the ratio of the height of each boundary wall, which is equal to the residual land height h₂, to the land height (h₁) is 0.25 - 0.80 (on average).

3. The optical recording medium according to claim 1, wherein the lower part of each sidewall of the land is left intact with a specified height (h₂) to form said boundary walls such that the ratio of the height of each boundary wall, which is equal to the residual land height h₂, to the land height (h₁) is 0.25 - 0.80 (on average), and the prepits are formed to have a length less than 3T [T: (1/channel bit rate) x the reference linear velocity].

4. The optical recording medium according to claim 1, wherein said prepits are formed to have a length of at least 3T [T: (1/channel bit rate) x the reference linear velocity].

5. The optical recording medium according to claim 1, wherein said prepits are formed to have a length of at least 3T [T: (1/channel bit rate) x the reference linear velocity), and the ratio of the height of each boundary wall (h₂) to the land height (h₁) is greater than 0.80 (on average).

6. The optical recording medium according to claim 1, wherein said recording layer contains one or more organic dyes having a maximum absorption wavelength (λₘₐₓ) of 400 - 700 nm in thin film.

7. The optical recording medium according to claim 6, wherein said organic dye is at least one member of the group consisting of trimethinecyanine dyes represented by the following general formula (I) and dye-metal chelate compounds (metal-containing azo dyes) represented by the following general formula (II) 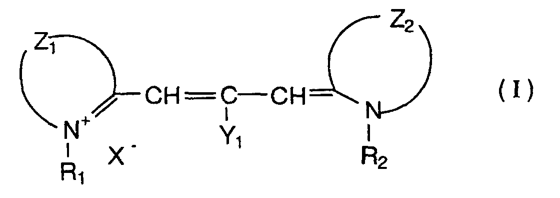 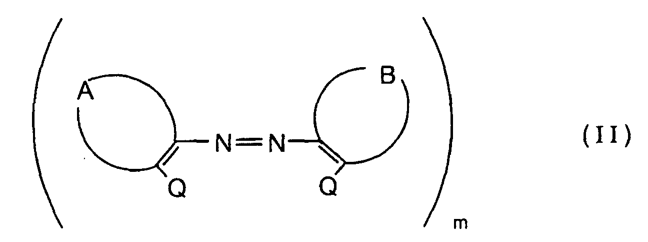 wherein the respective symbols have the following definitions:
R₁ and R₂ are each independently a substituted or unsubstituted alkyl group having 1 - 6 carbon atoms or a substituted or unsubstituted alkenyl group having 1 - 6 carbon atoms;
Z₁ and Z₂ are each independently a 5- or 6-membered heterocycle or an atomic group capable of forming a condensed ring containing a 5- or 6-membered heterocycle;
Y₁ is a hydrogen atom, a halogen atom or an alkyl group having 1 or 2 carbon atoms;
X is a monovalent anion;
A and B are each independently an atomic group which, together with the two carbon atoms to which they each are bound, forms an aromatic ring or a condensed ring that may have the same or different substituents;
Q is a group having active hydrogen;
m is a number of 1 or 2.
